# EUROPÄISCHE PATENTANMELDUNG

(11) **EP 1 914 609 A1**
(43) Veröffentlichungstag der Anmeldung: **23.04.2008**
(21) Anmeldenummer: 06021847.6
(22) Anmeldetag: 18.10.2006
(51) Int. Cl.: G05B 19/042

(54) **Zustimmschalter mit Mitteln zur Bestimmung seiner Position**

(71) Anmelder: SICK AG, 79183 Waldkirch (DE)
(72) Erfinder: Plasberg, Georg, Dr., 79353 Bahlingen (DE); Haarmann, Heike, 38600 Obersaasheim (FR); Elbert, Matthias, 79215 Biederbach (DE); Wüstefeld, Martin, 79350 Sexau (DE); Melder, Claus, 79280 Au (DE)
(74) Vertreter: Patentanwälte Westphal, Mussgnug & Partner

(57) **Zusammenfassung**

Die Erfindung betrifft eine Sicherheitsschalteinrichtung für einen durch motorisch angetriebene Komponenten definierten Gefährdungsbereich, welche in wenigstens zwei Schaltstufen versetzt werden kann, wobei in einer ersten Schaltstufe zumindest ein Teil der motorisch angetriebenen Komponenten in einen Zustand mit vermindertem Gefährdungspotenzial überführbar und in wenigstens einer zweiten Schaltstufe abschaltbar ist, und wobei die Sicherheitsschalteinrichtung eine Vorrichtung zur Bestimmung der Position der Sicherheitsschalteinrichtung innerhalb des Gefährdungsbereichs aufweist.

## Beschreibung

Die Erfindung betrifft eine Sicherheitsschalteinrichtung sowie ein Verfahren zur Überwachung eines durch motorisch angetriebene Komponenten definierten Gefährdungsbereichs.

Motorisch angetriebene Komponenten treten insbesondere in automatisierten Anlagen, insbesondere in solchen, in denen Roboter verwendet werden, auf. Dabei besteht häufig die Notwendigkeit, während des Betriebs der Anlage oder auch zu Einstell-, Inbetriebnahme- oder Wartungsarbeiten in direkter Nähe zu den motorisch angetriebenen Komponenten Arbeiten auszuführen, sodass Personen sich in der Nähe der motorisch angetriebenen Komponenten aufhalten müssen. Durch unkontrollierte Bewegungen, insbesondere von Robotern, besteht dabei jedoch ein hohes Gefährdungspotenzial für die entsprechenden Personen. Um Verletzungen der Personen zu vermeiden, wird ein Bereich um die motorisch angetriebenen Komponenten, in welchem prinzipiell Verletzungsgefahr bestehen könnte, d. h. ein so genannter Gefährdungsbereich, durch Schutzeinrichtungen wie bspw. Zäune abgegrenzt. Sobald eine Person diesen Bereich betritt, d. h. beispielsweise eine Tür in dem Zaun öffnet, werden sämtliche innerhalb des Zaunes angeordneten motorisch angetriebenen Komponenten abgeschaltet. Nachteilig dabei ist jedoch, dass es einerseits nicht möglich ist, eine Kooperation zwischen einer Person und einer Maschine in Betriebsfunktion zu ermöglichen, da sämtliche Komponenten vollständig abgeschaltet sind. Zudem wird ggf. die Produktion vollständig unterbrochen, was zu hohen Verlusten führen kann. Außerdem ist ein Anfahren sämtlicher in dem Gefährdungsbereich angeordneten Komponenten zeit- und kostenaufwändig.

In umfangreichen Anlagen werden daher die motorisch angetriebenen Komponenten in verschiedene kleinere Fertigungszellen unterteilt. Dafür sind jedoch viele Schutzzäune von Nöten, was zu hohen Kosten führt. Betritt eine Person eine Fertigungszelle, werden nur in diesem Bereich die entsprechenden motorisch angetriebenen Komponenten abgeschaltet. Allerdings kann dies Auswirkungen auf benachbarte Bereiche haben. Zudem ist weiterhin eine Kooperation zwischen einer benutzenden Person und einer motorisch angetriebenen Komponente, insbesondere einem Roboter, nicht möglich. Während des laufenden Betriebes ist weiterhin ein Betreten und damit die Durchführung von Einstell-, Inbetriebnahme- oder Wartungsarbeiten nicht möglich.

Um dennoch auch während des Betriebes in einen Gefährdungsbereich eintreten zu können, werden sog. Zustimmschalter verwendet. Durch einen sicheren, zwei- bis dreistufigen Zustimmschalter wird eine Zustimmfunktion ausgelöst, um in der gedrückten bzw. halbgedrückten Position des Zustimmschalters die automatisierten Vorgänge innerhalb des Gefährdungsbereiches mit vermindertem Gefahrenpotenzial durchzuführen, bspw. durch reduzierte Bewegungsgeschwindigkeiten der motorisch angetriebenen Komponenten. Durch Loslassen oder bei einem dreistufigen Zustimmschalter auch durch komplettes Durchdrücken des Zustimmschalters wird die entsprechende Bewegung jedoch sofort gestoppt und damit die Zustimmung zu der Bewegung wieder aufgehoben. Ein derartiger dreistufiger Zustimmschalter ist bspw. Der DE 199 09 968 A1 zu entnehmen. Nur wenn der Zustimmschalter in einer bestimmten Position gehalten wird, d. h. solange die entsprechende Person die Taste mit ihrer Hand gedrückt hält, ist eine Bewegung von Komponenten innerhalb des Gefährdungsbereichs möglich. Lässt die Person den Schalter los oder drückt die Person bspw. in Panik bei einem dreistufigen Zustimmschalter die Taste vollständig durch, werden sämtliche motorisch angetriebenen Komponenten in dem Gefährdungsbereich abgeschaltet. Ein drahtloser Zustimmschalter ist bspw. der DE 103 44 359 A1 zu entnehmen, sodass sichergestellt ist, dass eine Person den Zustimmschalter auch einfach mit sich führen kann.

Um jedoch flexibel Arbeiten innerhalb einer aufwändigen Anlage mit vielen motorisch angetriebenen Komponenten vornehmen zu können, dabei jedoch den Betriebsablauf der Anlage nicht übermäßig zu stören, muss die entsprechende Anlage aufwändig in mehrere kleine definierte Gefährdungsbereiche, beispielsweise Fertigungszellen, unterteilt werden. Dazu ist einerseits ein großer Aufwand an Schutzvorrichtungen, insbesondere an Schutzzäunen, nötig, andererseits müssen die einzelnen kleineren Gefährdungsbereiche aufwändig jeweils einzeln mit Zutrittskontrollen und Sicherheitsmaßen ausgestattet und aufeinander abgestimmt werden.

Um diese Nachteile zu umgehen und eine direkte Interaktion zwischen einem Benutzer und einer motorisch angetriebenen Komponente, insbesondere Robotern, zu ermöglichen, schlägt bspw. die DE 10 2005 003 827 A1 eine Vorrichtung vor, bei welcher mit Hilfe von wenigstens zwei Lichtschranken die Annäherung einer Person an eine Robotereinheit an einem Arbeitsplatz überwacht und die Robotereinheit aus ihrem Automatikbetriebsmodus, in dem sich die Robotereinheit befindet, sofern sich kein Mensch innerhalb eines vordefinierten Bereichs um die Robotereinheit aufhält, in einen vorgebbaren Zustand, den sog. sicheren Betriebshalt, überführt wird. Dieser sichere Betriebshalt zeichnet sich dadurch aus, dass die Robotereinheit in eine Art Stand-by Modus überführt wird, in welchem jedoch die Robotereinheit keine Bewegungen mehr durchführt. Auch mit Hilfe dieses Verfahrens ist es somit nicht möglich, dass eine direkte Kooperation zwischen dem Benutzer und der Robotereinheit, während die Person sich in der direkten Nähe der Robotereinheit befindet, durchgeführt werden kann.

Der DE 102 16 023 A1 ist bspw. ein Verfahren zu entnehmen, bei dem die Bewegungsdynamik der Person optisch erfasst und einer Bewertung unterzogen wird. Die DE 103 20 343 A1 hingegen offenbart ein Verfahren, bei dem der Robotereinheit ein Bewegungsmuster aufgeprägt wird, welches der Person ein Gefühl der Sicherheit gibt. Beide Verfahren setzen jedoch voraus, dass Personen im Raum zweifelsfrei detektiert werden können, wobei die Sensoren, die dies leisten können und gleichzeitig den hohen Anforderungen der einschlägigen Sicherheitsstandards wie bspw. der DIN EN 954 oder der IEC 61508 entsprechen, derzeit noch nicht verfügbar oder sehr aufwändig sind, wobei eine Serienreife derzeit noch nicht absehbar ist.

Der Erfindung liegt daher die Aufgabe zugrunde, eine Vorrichtung bereitzustellen, mit welcher ein Zugang einer Person in einen Gefährdungsbereich mit einfachen, aber sicheren Mitteln möglich ist, wobei jedoch stets die Sicherheit der Person gewährleistet sein muss und der Aufwand zur Absicherung des Gefährdungsbereichs möglichst gering gehalten werden soll. Weiterhin liegt der Erfindung die Aufgabe zugrunde, ein Verfahren zur Überwachung eines durch motorisch angetriebene Komponenten definierten Gefährdungsbereichs bereitzustellen, welches mit wenig Aufwand durchzuführen ist, jedoch den gängigen Sicherheitsstandards genügt.

Die Aufgabe wird gelöst durch eine Sicherheitsschalteinrichtung mit den Merkmalen des Patentanspruchs 1 sowie ein Verfahren zur Überwachung eines durch motorisch angetriebene Komponenten definierten Gefährdungsbereichs mit den Merkmalen des Patentanspruchs 12.

Gemäß der Erfindung wird eine Sicherheitsschalteinrichtung für einen durch motorisch angetriebene Komponenten definierten Gefährdungsbereich vorgeschlagen, welche auf dem Grundprinzip des sog. Zustimmschalters basiert. Die Sicherheitsschalteinrichtung ist daher in wenigstens zwei Schaltstufen versetzbar, wobei in einer ersten Schaltstufe zumindest ein Teil der motorisch angetriebenen Komponenten in einen Zustand mit vermindertem Gefährdungspotenzial überführbar und in wenigstens einer zweiten Schaltstufe zumindest ein Teil der motorisch angetriebenen Komponenten, vorzugsweise jedoch sämtliche in dem Gefährdungsbereich angeordneten motorisch angetriebenen Komponenten, abschaltbar ist. Grundsätzlich kann der Zustand mit vermindertem Gefährdungspotenzial auch bedeuten, dass entsprechenden Komponenten vollständig angehalten oder sogar abgeschaltet werden. Betritt eine Person mit einer Sicherheitsschalteinrichtung den Gefährdungsbereich, versetzt das Betreten mit Sicherheitsschalteinrichtung in der ersten Schaltstufe die Anlage in einen Betriebszustand mit reduziertem Gefahrenpotenzial. Wird jedoch die Betätigungsvorrichtung in die zweite Position und somit die Sicherheitsschalteinrichtung in die zweite Schaltstufe überführt, führt dies zur Abschaltung zumindest eines Teils der motorisch angetriebenen Komponenten. Die erfindungsgemäße Sicherheitsschalteinrichtung weist eine Vorrichtung zur Bestimmung der Position der Sicherheitsschalteinrichtung innerhalb des Gefährdungsbereichs auf. Dies führt dazu, dass die Gefährdungsbereiche wieder größer gewählt werden können und bspw. eine vollständige Fertigungsanlage mit sämtlichen motorisch angetriebenen Komponenten umfassen kann, wobei mit Hilfe der Position der Sicherheitsschalteinrichtung die Position des Benutzers innerhalb des Gefährdungsbereichs bestimmbar ist und somit die sich in der Nähe der Sicherheitsschalteinrichtung befindlichen motorisch angetriebenen Komponenten in einen Zustand mit vermindertem Gefährdungspotenzial überführbar sind. Um jedoch den Betriebsablauf der Anlage möglichst wenig zu stören, werden nur die in der Nähe der Sicherheitsschalteinrichtung angeordneten motorisch angetriebenen Komponenten in einen Zustand mit vermindertem Gefährdungspotenzial versetzt, d. h. bspw. wird die entsprechende Geschwindigkeit der Bewegungen der motorisch angetriebenen Komponenten verringert, während sich die Person frei in dem Gefährdungsbereich bewegen kann und in entfernten Abschnitten des Gefährdungsbereichs die motorisch angetriebenen Komponenten ihren normalen Betriebszustand beibehalten. Um bestimmen zu können, welche der motorisch angetriebenen Komponenten in einen Zustand mit vermindertem Gefährdungspotenzial zu überführen sind, kann bspw. für jede der motorisch angetriebenen Komponenten ein minimaler Abstand definiert werden, innerhalb welchem sich keine Person aufhalten darf, damit die entsprechenden Komponenten mit normaler Betriebsgeschwindigkeit bewegt werden können.

Vorzugsweise ist jedoch um die Sicherheitsschalteinrichtung ein Raumbereich definiert, welcher wenigstens so groß ist, dass ein Benutzer sich in ihm aufhalten kann, wobei bei Versetzen der Sicherheitsschalteinrichtung in die erste Schaltstufe die motorisch angetriebenen Komponenten, die sich innerhalb des um die Sicherheitsschalteinrichtung definierten Raumbereichs befinden, in einen Zustand mit vermindertem Gefährdungspotenzial überführbar sind. Trägt ein Benutzer die Sicherheitsschalteinrichtung mit sich herum, während er in den Gefährdungsbereich eintritt, ist somit sichergestellt, dass während seiner Bewegung durch den Gefährdungsbereich grundsätzlich sämtliche motorisch angetriebenen Komponenten, die sich in seiner Nähe, nämlich dem um die Sicherheitseinrichtung definierten Raumbereich befinden, in einen Zustand mit verringertem Gefährdungspotenzial überführt werden. Der Gefährdungsbereich kann somit auch sehr groß gewählt werden, wobei nur eine Schutzeinrichtung, bspw. ein Schutzzaun, um die gesamte auch komplex ausgebildete Anlage vonnöten ist, wobei lediglich eine Zutrittskontrolle in der Schutzvorrichtung benötigt wird, die überwunden werden muss, damit die Person den Gefährdungsbereich betreten kann. Aufwändige Unterteilungen in kleinere Gefährdungsbereiche mit Hilfe von Schutzeinrichtungen und aufwändige einzelne Zutrittskontrolle zu unterteilten kleineren Gefährdungsbereichen sind somit überflüssig. Die Person kann sich innerhalb des definierten Gefährdungsbereichs bewegen, wobei jedoch sichergestellt ist, dass sich die Person jederzeit mit allen Körperteilen innerhalb eines Raumbereichs befindet, in welchem die motorisch angetriebenen Komponenten in einen Zustand mit vermindertem Gefährdungspotenzial überführt wurden. Dieser Raumbereich kann bspw. ein Kugelvolumen mit einem Radius von 2 m sein, wodurch sichergestellt ist, dass eine Person jederzeit mit allen Körperteilen innerhalb dieses Raumbereichs angeordnet ist. Der Raumbereich kann jedoch auch sehr viel größer als die Dimensionen einer Person gewählt werden, um zu verhindern, dass sich bei sehr schneller Bewegung der Person durch den Gefährdungsbereich die Komponenten nicht rechtzeitig abschalten oder in den Zustand mit vermindertem Gefährdungspotenzial überführt werden können, bevor die Person die entsprechende motorisch angetriebene Komponente erreicht. In üblichen automatisierten Anlagen genügt jedoch in der Regel ein Raumbereich mit einem Kugelvolumen mit einem Radius von etwa 4 m. Wird der Raumbereich deutlich größer gewählt, besteht die Gefahr, dass zu viele motorisch angetriebene Komponenten in einen Zustand mit vermindertem Gefährdungspotenzial überführt werden, obwohl dies nicht nötig ist, sodass der Betriebsablauf der automatisierten Anlage unnötig gehemmt wird.

An der Sicherheitsschalteinrichtung ist vorzugsweise eine Betätigungsvorrichtung zum Überführen der Sicherheitsschalteinrichtung in eine der Schaltstufen vorgesehen. In wenigstens einer zweiten Position der Betätigungsvorrichtung befindet sich die Sicherheitsschalteinrichtung in der zweiten Schaltstufe und in einer ersten Position der Betätigungsvorrichtung in der ersten Schaltstufe. Eine der zweiten Position definiert eine Ruheposition der Betätigungsvorrichtung. Ruheposition bedeutet dabei, dass sich die Betätigungsvorrichtung ohne äußere Einwirkung in dieser Position befindet, so dass sich die Sicherheitsschalteinrichtung in der zweiten Schaltstufe befindet, wodurch ein Abschalten der motorisch angetriebenen Komponenten bewirkt wird. Nur durch gewolltes Überführen kann die Betätigungsvorrichtung aus der zweiten Position in die erste Position überführt werden, so dass auch die Sicherheitshalteeinrichtung in die erste Schaltstufe übergeht. Ein Loslassen der Betätigungsvorrichtung führt jedoch wieder dazu, dass die Sicherheitsschalteinrichtung in die zweite Schaltstufe übergeht, da die Betätigungsvorrichtung in diesem Fall wieder in ihre Ruheposition und somit in die zweite Position zurückkehrt, so dass dies zur Abschaltung zumindest eines Teils der motorisch angetriebenen Komponenten führt.

Bei einer besonders vorteilhaften Ausgestaltung der Erfindung weist die Sicherheitsschalteinrichtung eine Schnittstelle zum drahtlosen Datenaustausch auf, sodass die Sicherheitsschalteinrichtung problemlos vom Benutzer mitgeführt werden kann, ohne ggf. über Kabel stolpern zu können. Über die Schnittstelle wird insbesondere die Position der Sicherheitsschalteinrichtung zu einer Steuerung für die motorisch angetriebenen Komponenten übertragen, um mit Hilfe der Steuerung die motorisch angetriebenen Komponenten in den entsprechenden Betriebszustand, insbesondere den Zustand mit vermindertem Gefährdungspotenzial, überführen zu können.

In einer vorteilhaften Ausgestaltung der Erfindung weist die Vorrichtung zur Positionsbestimmung optische Marken auf, welche von einem Kamerasystem erkennbar sind. Bspw. können dazu die optischen Marken als Reflektoren, insbesondere als Retroreflektoren, ausgebildet sein. Die Sicherheitsschalteinrichtung muss dazu jedoch derart am Körper eines Benutzers angeordnet sein, dass bei beliebiger Bewegung der Person die optischen Marken mit Hilfe eines Kamerasystems detektiert werden können, um die Position des Benutzers innerhalb des Gefährdungsbereichs bestimmen zu können. Zudem muss ein aufwändiges Kamerasystem bereitgestellt werden. Die Sicherheitsschalteinrichtung kann damit bspw. nicht in der Hand gehalten werden. Ein in der Hand Halten ist jedoch bspw. dann nötig, wenn mit Hilfe eines Fingerdruckes die Betätigungsvorrichtung der Sicherheitsschalteinrichtung betätigt gehalten werden muss, um die Sicherheitsschalteinrichtung in der ersten Schaltstufe zu halten, während sich der Benutzer in dem Gefährdungsbereich aufhält.

Daher weist in einer alternativen vorteilhaften Ausgestaltung der Erfindung die Vorrichtung zur Positionsbestimmung Funkbaken auf, über welche die Position der Sicherheitsschalteinrichtung innerhalb des Gefährdungsbereichs mit einfachen Mitteln genau bestimmt werden kann.

In einer besonders bevorzugten Ausführungsform der Erfindung ist die Sicherheitsschalteinrichtung nur dann in die erste Schaltstufe überführbar, wenn die Betätigungsvorrichtung in die erste Position verschoben und dort gehalten ist. Dies kann in der Regel nur durch manuellen Tastendruck durch die entsprechende Person geschehen. Dadurch wird sichergestellt, dass der Benutzer bewusst die Betätigungsvorrichtung in die erste Position verschieben und dort halten muss, solange er sich im Gefährdungsbereich aufhält. Ein versehentliches Loslassen der Betätigungsvorrichtung führt dazu, dass die Betätigungsvorrichtung wieder in die zweite Position zurück verschoben wird und damit die Sicherheitsschalteinrichtung in die zweite Schaltstufe überführt wird, in welcher sämtliche motorisch angetriebenen Komponenten vollständig abgeschaltet werden.

Bei einer derartigen Ausführung der Sicherheitsschalteinrichtung ist es jedoch nicht möglich, Arbeiten mit beiden Händen an einer der motorisch angetriebenen Komponenten durchzuführen, da grundsätzlich mit einer Hand die Betätigungsvorrichtung gedrückt gehalten werden muss. Daher ist in einer alternativen Ausführungsform der Erfindung ein Sensor vorgesehen, der geeignet ist, den Abstand der Sicherheitsschalteinrichtung zu einem Benutzer zu ermitteln. Dazu können bspw. Sensoren verwendet werden, die den Abstand zur Haut einer Person bestimmen. In Abhängigkeit von dem Abstand zwischen der Sicherheitsschalteinrichtung und dem Benutzer kann damit ein Signal ausgegeben werden, welches entweder dafür sorgt, dass nur die Komponenten in dem Raumbereich in einen Zustand mit vermindertem Gefährdungspotenzial überführt werden oder, falls der Abstand zwischen dem Benutzer und der Sicherheitseinrichtung zu groß ist und somit davon ausgegangen werden kann, dass der Benutzer die Sicherheitsschalteinrichtung weggelegt hat, sämtliche motorisch angetriebenen Komponenten in dem Gefährdungsbereich vollständig abgeschaltet werden, um eine Verletzung der Person zu vermeiden.

Bei einer besonders vorteilhaften Ausgestaltung der Erfindung weist die Betätigungsvorrichtung der Sicherheitsschalteinrichtung zwei zweite Positionen auf, in welchen die Sicherheitsschalteinrichtung in die zweite Schaltstufe überführbar ist. Die Sicherheitsschalteinrichtung ist damit als sog. dreistufige Schalteinrichtung ausgebildet, bei welcher die erste Position zwischen den beiden zweiten Positionen liegt und somit einerseits bei Loslassen der Betätigungsvorrichtung sichergestellt ist, dass die Betätigungsvorrichtung aus der ersten Position wieder in eine zweite Positionen überführt wird, andererseits jedoch gewährleistet ist, dass bei einer sog. Paniksituation, in der der Benutzer verkrampft und die Betätigungsvorrichtung mit großer Kraft drückt, die Betätigungsvorrichtung ebenfalls in eine zweite Position überführt wird, in welcher ebenfalls die motorisch angetriebenen Komponenten abgeschaltet werden.

Das erfindungsgemäße Verfahren zur Überwachung eines durch motorisch angetriebene Komponenten definierten Gefährdungsbereichs weist folgende Schritte auf: Der Gefährdungsbereich wird auf den Eintritt eines Benutzers überwacht, wobei der Benutzer bei Eintritt in den Gefährdungsbereich eine Sicherheitsschalteinrichtung mit sich führen sollte. Diese ist vorzugsweise erfindungsgemäß ausgebildet. Ein Eintritt in den Gefährdungsbereich kann bspw. bei Durchschreiten von Lichtschranken oder Öffnen von Türen innerhalb eines Schutzzaunes um den Gefährdungsbereich detektiert werden. Auch bei dem Eintritt können bestimmte Zutrittskontrollen durchgeführt werden, die verhindern, dass unbefugte Personen in den Gefährdungsbereich eintreten können. Tritt eine Person in den Gefährdungsbereich ein, wird die Position der Sicherheitsschalteinrichtung innerhalb des Gefährdungsbereichs ermittelt. Sollte die Person keine Sicherheitsschalteinrichtung bei sich führen, werden automatisch sämtliche motorisch angetriebenen Komponenten vollständig abgeschaltet, um sicherzustellen, dass die Person nicht durch unkontrollierte Bewegungen der motorisch angetriebenen Komponenten verletzt wird. Gleichzeitig muss auch die Schaltstufe der Sicherheitsschalteinrichtung bei Eintritt des Benutzers in den Gefährdungsbereich ermittelt werden. Befindet sich die Sicherheitsschalteinrichtung in einer zweiten Schaltstufe, führt dies ebenfalls dazu, dass die motorisch angetriebenen Komponenten abgeschaltet werden. Hat jedoch der Benutzer eine Sicherheitsschalteinrichtung bei sich und befindet sich diese in einer ersten Schaltstufe, wird ein Raumbereich um die Sicherheitsschalteinrichtung bestimmt, welcher wenigstens so groß ist, dass der Benutzer sich in ihm aufhalten kann. Innerhalb dieses Raumbereichs werden die motorisch angetriebenen Komponenten in einen Zustand mit vermindertem Gefährdungspotenzial überführt. Sofern bei einem Aufenthalt der Person innerhalb des Gefährdungsbereichs zu einem beliebigen Zeitpunkt die Sicherheitsschalteinrichtung von der ersten Schaltstufe in die zweite Schaltstufe übergeht, werden automatisch sämtliche motorisch angetriebenen Komponenten abgeschaltet, da nicht mehr gewährleistet ist, dass die Person sich in dem Raumbereich, welcher um die Sicherheitsschalteinrichtung definiert wurde, aufhält und somit Verletzungsgefahr für die Person bestehen könnte.

Dabei ist vorzugsweise die erste Schaltstufe der Sicherheitsschalteinrichtung nur dann geschaltet, wenn der Benutzer eine Betätigungsvorrichtung der Sicherheitsschalteinrichtung betätigt hält. Dies garantiert, dass bei Loslassen der Betätigungseinrichtung die Sicherheitsschalteinrichtung in eine zweite Schaltstufe überführt wird, in welchem die motorisch angetriebenen Komponenten innerhalb des gesamten Gefährdungsbereichs abgeschaltet werden.

Alternativ ist die erste Schaltstufe der Sicherheitsschalteinrichtung nur dann geschaltet, wenn mit Hilfe eines an der Sicherheitsschalteinrichtung angeordneten Sensors der Abstand der Sicherheitsschalteinrichtung zu dem Benutzer ermittelt wird und dieser Abstand kleiner ist als ein vorgegebener Maximalabstand. Dieser Maximalabstand darf höchstens einige Zentimeter betragen, damit sichergestellt ist, dass sich die Sicherheitsschalteinrichtung in der direkten Nähe der Person befindet. Dadurch wird ermöglicht, dass die Person den Schalter in der Tasche tragen kann und mit beiden Händen entsprechende Wartungsarbeiten an den motorisch angetriebenen Komponenten vornehmen kann, während gleichzeitig sichergestellt ist, dass sich die Person immer mit allen Körperteilen in dem um die Sicherheitsschalteinrichtung definierten Raumbereich befindet und somit keiner Verletzungsgefahr ausgesetzt ist.

Bei einer vorteilhaften Ausführungsform des Verfahrens ist die erste Schaltstufe nur dann geschaltet, wenn mit Hilfe eines Identifikationssystems der Benutzer als zutrittsberechtigt identifiziert wurde. Dadurch wird gewährleistet, dass nicht beliebige Benutzer sich mit Hilfe einer geeigneten Sicherheitsschalteinrichtung Zutritt zu Gefährdungsbereichen verschaffen können. In den Identifikationssystem kann hinterlegt werden, welche Benutzer zu dem Gefährdungsbereich, ggfs. auch zu welchen Teilen von größeren Gefährdungsbereichen, Zutritt haben, wobei vor Zutritt zu dem Gefährdungsbereich die Identität des Benutzers festgestellt wird und erst anschließend die entsprechende Sicherheitsschalteinrichtung für die Überführung in die erste Schaltstufe freigegeben wird. Versucht somit ein nicht berechtigter Benutzer, in den Gefährdungsbereich einzutreten, kann die Sicherheitsschalteinrichtung nicht in die erste Schaltstufe überführt werden, so dass bei Eintritt des Benutzers in den Gefährdungsbereich sämtliche motorisch angetriebenen Komponenten abgeschaltet werden.

## Patentansprüche

1. Sicherheitsschalteinrichtung für einen durch motorisch angetriebene Komponenten definierten Gefährdungsbereich, welche in wenigstens zwei Schaltstufen versetzt werden kann, wobei in einer ersten Schaltstufe zumindest ein Teil der motorisch angetriebenen Komponenten in einen Zustand mit vermindertem Gefährdungspotenzial überführbar und in wenigstens einer zweiten Schaltstufe abschaltbar ist, und wobei die Sicherheitsschalteinrichtung eine Vorrichtung zur Bestimmung der Position der Sicherheitsschalteinrichtung innerhalb des Gefährdungsbereichs aufweist.

2. Sicherheitsschalteinrichtung nach Anspruch 1,
**dadurch gekennzeichnet, dass** um die Sicherheitsschalteinrichtung ein Raumbereich definiert ist, welcher wenigstens so groß ist, dass ein Benutzer sich in ihm aufhalten kann, wobei bei Versetzen der Sicherheitsschalteinrichtung in die erste Schaltstufe die motorisch angetriebenen Komponenten, die sich innerhalb des um die Sicherheitsschalteinrichtung definierten Raumbereichs befinden, in einen Zustand mit vermindertem Gefährdungspotenzial überführbar sind.

3. Sicherheitsschalteinrichtung nach Anspruch 1 oder 2,
**dadurch gekennzeichnet, dass** die Sicherheitsschalteinrichtung eine Schnittstelle zum drahtlosen Datenaustausch aufweist.

4. Sicherheitsschalteinrichtung nach einem der Ansprüche 1 bis 3,
**dadurch gekennzeichnet, dass** die Vorrichtung zur Positionsbestimmung optische Marken aufweist, welche von einem Kamerasystem erkennbar sind.

5. Sicherheitsschalteinrichtung nach Anspruch 4,
**dadurch gekennzeichnet, dass** die optischen Marken als Reflektoren, insbesondere als Retroreflektoren, ausgebildet sind.

6. Sicherheitsschalteinrichtung nach einem der Ansprüche 1 bis 3,
**dadurch gekennzeichnet, dass** die Vorrichtung zur Positionsbestimmung Funkbaken aufweist.

7. Sicherheitsschalteinrichtung nach einem der vorhergehenden Ansprüche,
**dadurch gekennzeichnet, dass** eine Betätigungsvorrichtung zum Überführen der Sicherheitsschalteinrichtung in eine der Schaltstufen vorgesehen ist, wobei die Sicherheitsschalteinrichtung in wenigstens einer zweiten Position der Betätigungsvorrichtung in der zweiten Schaltstufe und in einer ersten Position der Betätigungsvorrichtung in der ersten Schaltstufe ist, wobei eine der zweiten Positionen eine Ruheposition der Betätigungsvorrichtung ist.

8. Sicherheitsschalteinrichtung nach Anspruch 7,
**dadurch gekennzeichnet, dass** die Betätigungsvorrichtung zwei zweite Positionen aufweist, in welchen die Sicherheitsschalteinrichtung in die zweite Schaltstufe überführbar ist.

9. Sicherheitsschalteinrichtung nach Anspruch 7 oder 8,
**dadurch gekennzeichnet, dass** die Sicherheitsschalteinrichtung nur in die erste Schaltstufe überführbar ist, wenn die Betätigungsvorrichtung in die erste Position verschoben und dort gehalten ist.

10. Sicherheitsschalteinrichtung nach einem der vorhergehenden Ansprüche,
**dadurch gekennzeichnet, dass** ein Sensor vorgesehen ist, der geeignet ist, den Abstand der Sicherheitsschalteinrichtung zu einem Benutzer zu ermitteln.

11. Sicherheitsschalteinrichtung nach Anspruch 10,
**dadurch gekennzeichnet, dass** der Sensor geeignet ist, die Sicherheitsschalteinrichtung in die ersten Schaltstufe zu überführen, sofern der Abstand zwischen der Sicherheitsschalteinrichtung und dem Benutzer kleiner ist als ein vorgegebener Maximalabstand.

12. Verfahren zur Überwachung eines durch motorisch angetriebene Komponenten definierten Gefährdungsbereichs, mit den Schritten:
- Überwachen des Gefährdungsbereich auf den Eintritt eines Benutzers, wobei der Benutzer eine Sicherheitsschalteinrichtung, welche in wenigstens zwei Schaltstufen versetzt werden kann, wobei in einer ersten Schaltstufe zumindest ein Teil der motorisch angetriebenen Komponenten in einen Zustand mit vermindertem Gefährdungspotenzial überführbar und in wenigstens einer zweiten Schaltstufe abschaltbar ist, mit sich führen sollte,
- Ermittlung der Position der Sicherheitsschalteinrichtung innerhalb des Gefährdungsbereichs,
- Abschalten der motorisch angetriebenen Komponenten, falls der Benutzer keine Sicherheitsschalteinrichtung bei sich trägt oder die Sicherheitsschalteinrichtung in einer zweiten Schaltstufe ist,
- Bestimmung eines Raumbereichs um die Sicherheitsschalteinrichtung, welcher wenigstens so groß ist, dass der Benutzer sich in ihm aufhalten kann,
- Überführen der motorisch angetriebenen Komponenten, die sich innerhalb dieses Raumbereichs befinden, in einen Zustand mit vermindertem Gefährdungspotenzial, sofern die Sicherheitsschalteinrichtung in einer ersten Schaltstufe ist.

13. Verfahren nach Anspruch 12,
**dadurch gekennzeichnet, dass** die erste Schaltstufe der Sicherheitsschalteinrichtung nur dann geschaltet ist, wenn der Benutzer eine Betätigungsvorrichtung der Sicherheitsschalteinrichtung betätigt hält, und bei Loslassen der Betätigungseinrichtung die Sicherheitsschalteinrichtung in eine zweite Schaltstufe überführt wird, in welchem die motorisch angetriebenen Komponenten innerhalb des gesamten Gefährdungsbereichs abgeschaltet werden.

14. Verfahren nach Anspruch 12,
**dadurch gekennzeichnet, dass** die erste Schaltstufe der Sicherheitsschalteinrichtung nur dann geschaltet ist, wenn mit Hilfe eines an der Sicherheitsschalteinrichtung angeordneten Sensors der Abstand der Sicherheitsschalteinrichtung zu dem Benutzer ermittelt wird und dieser Abstand kleiner ist als ein vorgegebener Maximalabstand.

15. Verfahren nach einem der Ansprüche 12 bis 14,
**dadurch gekennzeichnet, dass** die Sicherheitsschalteinrichtung als Sicherheitsschalteinrichtung nach einem der Ansprüche 1 bis 11 ausgebildet ist.

16. Verfahren nach einem der Ansprüche 12 bis 15,
**dadurch gekennzeichnet, dass** die erste Schaltstufe nur dann geschaltet ist, wenn mit Hilfe eines Identifikationssystems der Benutzer als zutrittsberechtigt identifiziert wurde.
